(19) Europäisches Patentamt
European Patent Office
Office européen des brevets

(11) EP 2 770 574 B1

(12) **EUROPEAN PATENT SPECIFICATION**

(45) Date of publication and mention of the grant of the patent:
**04.05.2016 Bulletin 2016/18**

(21) Application number: **12841374.7**

(22) Date of filing: **21.09.2012**

(51) Int Cl.:
***H01M 10/06*** *(2006.01)* ***H01M 4/14*** *(2006.01)*
***H01M 4/62*** *(2006.01)* ***H01M 10/08*** *(2006.01)*
***H01M 10/12*** *(2006.01)*

(86) International application number:
**PCT/JP2012/074268**

(87) International publication number:
**WO 2013/058058 (25.04.2013 Gazette 2013/17)**

(54) **LEAD STORAGE BATTERY**

BLEIAKKUMULATOR

BATTERIE AU PLOMB

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2011 JP 2011228560**

(43) Date of publication of application:
**27.08.2014 Bulletin 2014/35**

(73) Proprietor: **Hitachi Chemical Company, Ltd.**
**Chiyoda-ku,**
**Tokyo**
**100-6606 (JP)**

(72) Inventors:
- **SHIBAHARA, Toshio**
**Tokyo 104-0044 (JP)**
- **MINOURA, Satoshi**
**Tokyo 104-0044 (JP)**
- **KOGURE, Koji**
**Tokyo 104-0044 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A1- 2 280 443**
**WO-A1-2011/108056**
**WO-A1-2011/142072**
**WO-A1-2012/042917**
**JP-A- S6 229 073**
**JP-A- H02 106 875**
**JP-A- S58 155 672**
**JP-A- S63 213 264**
**US-A1- 2008 107 960**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 770 574 B1

## Description

### Technical Field

The present invention relates to a flooded-type lead acid battery which contains free electrolyte isolated from a plate group and separators in a battery container.

### Background Art

The lead acid battery at a low price with high reliability has been widely employed as the power sources for starting an automobile, and for a motor-driven vehicle such as a golf cart, and further as the power source for industrial equipment such as the uninterruptible power supply system.

Recently, various kinds of measures, which improve fuel efficiency of the automobile, have been taken for preventing air pollution and global warming. As for the automobile given with measures for improving the fuel efficiency, examinations have been made with respect to the idling-stop vehicle (hereinafter referred to as ISS vehicle) which reduces the time period for running the engine, and the microhybrid vehicle such as the power generation control vehicle which uses engine rotations for power without waste. For the ISS vehicle, every time for frequent engine starting, the lead acid battery executes the large current discharge repeatedly. For the ISS vehicle and the power generation control vehicle, the electric power generated by the alternator is reduced, and the lead acid battery is intermittently charged, which may often cause insufficient charge. For this, the lead acid battery for the aforementioned type of usage is required to improve the performance sufficient to charge as much as possible within a short period of time, in other words, charge acceptance.

The lead acid battery to be used as described above is operated in a partial state of charge called PSOC. In use under PSOC, the lead acid battery is likely to reduce its life shorter than that of the battery operated under full state of charge. It is thought that the reason for shortening the life under PSOC is in that repetitive charging and discharging in the insufficient state of charge coarsens lead sulfate generated on the negative plate in discharging and the coarsened lead sulfate can hardly revert to the metallic lead as the charging product. Therefore, it is necessary for the lead acid battery used under PSOC to prevent repetitive charging and discharging under excessively insufficient state of charge so as to lessen coarsening of the lead sulfate by the repetitive charging and discharging by improving charge acceptance (enabling the charge as much as possible within a short period of time) for prolonged life.

As described above, it is an essential task for the recent automotive lead acid battery to enhance the charge acceptance for enabling high-rate discharge to the load by charge for a short period of time, and improving the life performance of the battery in use under PSOC.

The lead acid battery exhibits high charge acceptance of the positive active material, but inferior charge acceptance of the negative active material. Accordingly, it is essential to improve the charge acceptance of the negative active material for the purpose of enhancing the charge acceptance of the lead acid battery. For this, conventionally, efforts have been made to especially improve the charge acceptance of the negative active material. Patent Literature 1 (JP-A-2003-36882) and Patent Literature 2 (JP-A-07-201331) propose enhancement of charge acceptance by increasing addition amount of carbonaceous conductive material to the negative active material to prolong the life of the lead acid battery in use under PSOC.

The aforementioned proposal is intended to be applied to the sealed type lead acid battery configured to impregnate the separator called retainer with the electrolyte so that free electrolyte isolated from a plate group and separators dose not exist in the battery container. It is not practically applied to the flooded-type lead acid battery having free electrolyte isolated from the plate group and separators in the battery container. Increase in the amount of carbonaceous conductive material added to the negative active material may be considered for the flooded-type lead acid battery. However, if such amount of the carbonaceous conductive material added to the negative active material is excessively increased unnecessarily, the carbonaceous conductive material in the negative active material may flow into the electrolyte to be brought into a muddy state. This cause the internal short-circuit in the worst case. Accordingly, the addition amount of the carbonaceous conductive material to the negative active material has to be limited. Therefore, there is a limitation of enhancing the charge acceptance of the lead acid battery as a whole by adding the carbonaceous conductive material to the negative active material.

As the sealed type lead acid battery restricts the electrolyte quantity, the battery capacity becomes low, and the phenomenon called thermal runaway occurs at the high temperature in use. Therefore, it is necessary to avoid the use of this type of lead acid battery under the high temperature environment such as the engine room. If the sealed type lead acid battery is used for automobile, the battery has to be installed in the luggage room. However, it is not preferable to install the battery in the luggage room because of the need of increasing the wire harness. Preferably, the flooded-type lead acid battery is used for automobile as it has no limitation as described above. Therefore, it is urgent task to enhance the charge acceptance of the flooded-type lead acid battery.

Patent Literature 3 (JP-A-2006-196191) discloses addition of the carbonaceous conductive material in order to improve the charge acceptance. Patent Literature 4 (JP-A-2003-051306) discloses addition of the conductive carbon and activated charcoal to the negative active material so as to improve the discharge characteristic under PSOC.

Patent Literature 5 (JP-A-10-40907) discloses increase in the discharge capacity by increasing the specific surface area of the positive active material. More specifically, lignin is added to the electrolyte to miniaturize the positive active material ant to increas the specific surface area of the positive active material at the time of formation. Patent Literature 5 is intended to increase the battery discharge capacity, and does not provide significant effect for enhancing the charge acceptance and cycle characteristic under PSOC required for the lead acid battery for the idling-stop vehicle or the power generation control vehicle.

As for the electrolyte additive, the following technology has been known.

Patent Literature 6 (JP-A-62-29073) discloses addition of the organic and/or inorganic coagulant to the electrolyte. It is intended to improve the battery life by preventing the internal short-circuit as the main cause of floating of $PbO_2$ particulates in the electrolyte.

Patent Literature 7 (JP-A-02-236967) discloses addition of the surfactant to the electrolyte. It is intended to improve the recovering charge characteristic after being left in the overdischarge state.

Patent Literature 8 (JP-A-2011-165378) discloses addition of the phosphoric acid to the electrolyte. It is intended to increase the positive active material utilization, and to prolong the battery life. Further lead acid batteries are for instance known from US 2008/107960A1, EP 2 280 443 A1, JP H02 106875.

Related Art

Patent Literature

Patent Literature 1: JP-A-2003-36882
Patent Literature 2: JP-A-07-201331
Patent Literature 3: JP-A-2006-196191
Patent Literature 4: JP-A-2003-051306
Patent Literature 5: JP-A-10-40907
Patent Literature 6: JP-A-62-29073
Patent Literature 7: JP-A-02-236967
Patent Literature 8: JP-A-2011-165378

Summary of the Invention

Technical Problem

Conventionally, the proposal that especially focuses on improvement in performance only of the negative active material has been made to enhance the charge acceptance and life performance of the flooded-type lead acid battery under PSOC as described above. However, mere improvement in the charge acceptance of the negative active material and the life performance is not sufficient solution for enhancing the charge acceptance of the lead acid battery and the life performance in use under PSOC. It is therefore difficult to aim at further enhancing performance of the lead acid battery in use under PSOC.

It is an object of the present invention to provide the flooded-type lead acid battery configured to perform intermittent charge for a short period of time and high-rate discharge to the load under the partial state of charge, which is intended to further enhance the charge acceptance and the life performance in use under PSOC compared with the generally employed lead acid battery.

Solution to Problem

The present invention relates to a flooded-type lead acid battery structured to store a plate group obtained by laminating the negative plates each formed by filling the negative current collector with the negative active material, and the positive plates each formed by filling the positive current collector with the positive active material via separators in the battery container together with the electrolyte. It is further configured to perform intermittent charge and high-rate discharge to the load under partial state of charge.

According to the present invention, at least the carbonaceous conductive material and the organic compound for suppressing coarsening of the negative active material accompanied by repetition of charging and discharging (hereinafter referred to as "organic compound for suppressing coarsening of negative active material") are added to the negative active material.

The positive plate is configured to have the positive active material total surface area [$m^2$] per unit plate group volume [$cm^3$] set in a range between 3.5 and 15.6 [$m^2/cm^3$]. Moreover, compound(s) chosen from among cationic coagulant, cationic surfactant and phosphoric acid are added to the electrolyte.

The term "plate group volume" denotes the apparent volume of the part concerning power generation among the respective parts of the plate group stored in the single cell as the minimum unit of the lead acid battery from an overall view while ignoring the outer surface roughness. According to the invention, the part derived from removing the lug and leg parts of the positive and the negative current collectors among the respective parts of the plate group (if there is no leg part, the lug part is only removed, which applies to the subsequent description) is designated as the one concerning power generation of the plate group. In the specification, [$cm^3$] is used as the unit of the plate group volume.

If each size of the positive plate and the negative plate which constitute the plate group is the same, the area of one surface of the part of the negative current collector, having the lug and leg parts removed is multiplied by the thickness (dimension measured in the stacking direction of the plate) of the plate group stored in the cell chamber. Alternatively, the area of one surface of the part of the positive current collector, having the lug and leg parts removed is multiplied by the thickness dimension of the plate group stored in the cell chamber. The aforementioned calculation is performed to obtain the plate group volume.

If the size of the positive plate is different from that of the negative plate, the area of one surface of the larger current collector having the lug and leg parts removed is multiplied by the depth dimension of the plate group stored in the cell chamber. Such calculation is performed to obtain the plate group volume.

The term "positive active material total surface area" denotes a total surface area of the positive active material of all the positive plates that constitute the plate group stored in the single cell as the minimum unit of the lead acid battery. The positive active material surface area Sk of the kth positive plate may be expressed as the product of the specific surface area of the active material filled in the kth positive plate and the active material mass. Assuming that the number of the positive plates that constitute the single plate group is n, and the positive active material total surface area is designated as Sp, the total surface area may be expressed as Sp = S1+S2+ ... +Sn. According to the present invention, the "positive active material total surface area per unit plate group volume" is obtained by dividing the aforementioned "positive active material total surface area" by the above-defined "plate group volume". In this specification, [$m^2$] is used as the unit of the positive active material total surface area, and [g] is used as the unit of the active material mass in order to avoid excessive increase in the value of the "positive active material total surface area per unit plate group volume". Accordingly, [$m^2/g$] is the unit of the specific surface area. According to the present invention, the specific surface area of the active material will be measured through the measurement method to be described below.

The preferred embodiment of the invention employs the negative plate having at least the carbonaceous conductive material and the organic compound for suppressing coarsening of the negative active material added thereto, and sets the positive active material total surface area [$m^2$] per unit plate group volume [$cm^3$] to be in a range between 3.5 and 15.6 [$m^2/cm^3$]: The compound(s) chosen from among cationic coagulant, cationic surfactant and phosphoric acid are added to the electrolyte. The positive plate is configured so that its total surface area [$cm^2$] per unit plate group volume [$cm^3$] is set to be in the range between 2.6 and 3.9 [$cm^2/cm^3$]. As described above, [$m^2$] is used as the unit of the positive active material total surface area, and [$cm^2$] is used as the unit of the positive plate total surface area.

The term "positive plate total surface area" denotes the total surface area of the part concerning power generation of the positive plate that constitutes the plate group stored in the single cell as the minimum unit of the lead acid battery. According to the present invention, the total surface area of the upper and back surfaces of the part having the lug and leg parts of the respective positive current collectors removed (if the frame of the current collector is square or rectangular, twice the product of the vertical and lateral dimensions of the current collector frame) [$cm^2$] is multiplied by the number of the positive plates that constitute the plate group so as to obtain the "positive plate total surface area". The value obtained by dividing the aforementioned "positive plate total surface area" by the "plate group volume" is set to the "positive plate total surface area per unit plate group volume".

Findings of the inventor of the present invention will be described. That is, setting of the positive active material total surface area per unit plate group volume to be in an appropriate range may reduce the reaction overvoltage upon the charge reaction of the positive active material to facilitate proceeding of the charge reaction, and accordingly improve the charge acceptance of the positive active material. Then at least the carbonaceous conductive material and the organic compound for suppressing coarsening of the negative active material are added thereto to improve charge acceptance and life performance of the negative plate (hereinafter referred to as "negative plate with improved performance"). Use of the positive plate with improved charge acceptance together with the negative plate further enhances the charge acceptance of the lead acid battery as a whole and the life performance under PSOC compared with the generally employed lead acid battery.

In the state where the negative plate with improved performance is used, and the positive active material total surface area per unit plate group voltage is set to be in the appropriate range, further setting of the positive plate total

surface area per unit plate group volume to be in the appropriate range makes it possible to enhance the charge acceptance of the lead acid battery as a whole arid its life performance in use under PSOC.

In the present invention, the "positive active material total surface area per unit plate group volume" and "positive plate total surface area per unit plate group volume" are newly introduced as parameters for accurately specifying the structure of the positive plate required for obtaining the effect to facilitate proceeding of the charge reaction by reducing the reaction overvoltage upon the charge reaction of the positive active material.

Specifying a range of the specific surface area of the positive active material in the wide range may be considered to obtain the effect expected to facilitate the proceeding of the charge reaction by reducing the reaction overvoltage upon charge reaction of the positive active material. A mere specifying the specific surface area of the positive active material may fail to uniquely limit the structure of the positive plate required for obtaining the aforementioned effect. In other words, use of the active material with narrow specific surface area allows reduction in the reaction overvoltage upon charge reaction of the positive active material by increasing the active material mass so as to obtain the effect to facilitate proceeding of the charge reaction. Accordingly, the mere specification of the specific surface area range cannot accurately identify the structure of the positive plate required for obtaining the aforementioned effect.

The similar effect may also be obtained by increasing the number of the plates to enlarge the positive plate total surface area. However, as JIS D 5301 specifies, actually, there is the limitation demanding the lead acid battery to satisfy the rated capacity by storing the plate group in the constant battery volume. Therefore, the active material mass and the surface area (number of the plates) cannot be set freely. In order to strictly specify the structure of the positive plate required for obtaining the expected effect in consideration of such limitation, the present invention uses the "positive active material total surface area" as the product of the specific surface area and the active material mass instead of the specific surface area. Furthermore, instead of the number of the plates, "positive plate total surface area" is used as the total surface area of the part concerning power generation of the positive plate. Then the positive plate total surface area is divided by the plate group volume to obtain the value as the positive plate total surface area per unit plate group volume so as to be used as the parameter for specifying the positive plate structure.

If the positive active material total surface area per unit plate group volume is set to be smaller than 3.5 $m^2/cm^3$, the effect for remarkably enhancing the charge acceptance of the lead acid battery as a whole cannot be obtained. If it is set to be equal to or larger than 3.5 $m^2/cm^3$, the effect for remarkably enhancing the charge acceptance of the lead acid battery as a whole may be obtained. Success in enhancement of the charge acceptance of the lead acid battery as a whole allows the high-rate discharge to the load under PSOC (partial state of charge) without interference. The repetitive charging and discharging in the insufficient state of charge may suppress coarsening of the lead sulfate as the discharge product. This makes it possible to improve the life performance of the battery in use under PSOC.

If the value of the positive active total surface area per unit plate group volume is set to be excessively large, the positive active material is so miniaturized that the active material structure is collapsed accompanied by repetitive charging and discharging. This may cause the phenomenon so called muddy state. As a result, the life of the positive plate is shortened, failing to provide the lead acid battery endurable to practical use. In view of the aforementioned circumstance, it is not appropriate to increase the positive active substance total surface area per unit plate group volume to be unnecessarily large. According to the experimental result, it is possible to enhance the charge acceptance and life performance of the battery by setting the positive active material total surface area per unit plate group volume to 35 $m^2/cm^3$ or larger. However, it has been clarified that if such value exceeds 15.6 $m^2/cm^3$, the phenomenon that brings the positive active material into the muddy state occurs. As a result, the value of the positive active material total surface area per unit plate group volume is set to be in the range between 3.5 $m^2/cm^3$ and 15.6 $m^2/cm^3$.

The negative plate with improved performance, having at least the carbonaceous conductive material and the organic compound for suppressing coarsening of the negative- active material accompanied by charging and discharging added to the negative active material, and the positive plate having the positive active material total surface area per unit plate group volume concerning the discharge reaction set in the range between 3.5 $m^2/cm^3$ and 15.6 $m^2/cm^3$ are combined to assemble the lead acid battery. This makes it possible to enhance the charge acceptance compared with the generally employed lead acid battery with the charge acceptance enhanced by improving the performance only of the negative plate. The high-rate discharge to the load is ensured under PSOC and the life performance under PSOC is improved by suppressing coarsening of the lead phosphate as the discharge product accompanied by repetitive charging and discharging in the insufficient state of charge.

Additionally, compound(s) chosen from among cationic coagulant, cationic surfactant and phosphoric acid are added to the electrolyte to provide the following effects. If the cationic coagulant or the cationic surfactant is added, it is electrically adsorbed with the organic compound (negatively charged) for suppressing coarsening of the negative active material accompanied by charging and discharging to reduce the adsorption amount of the organic compound to the lead ion. This makes it possible to lessen the side effect to interfere with charge reaction of the negative plate. If the phosphoric acid is added, the function for miniaturizing the lead sulfate of the positive plate allows higher charge acceptance of the positive electrode.

According to the present invention, the positive plate having the positive active material total surface area per

unit plate group volume set in the appropriate range is combined with the negative plate with improved performance (charge acceptance and life performance). Additionally, the compound(s) chosen from among cationic coagulant, cationic surfactant and phosphoric acid are added to the electrolyte so as to ensure remarkable effect for enhancing the charge acceptance and the life performance of the lead acid battery in use under PSOC. Furthermore, it has been clarified that use of the positive plate having the positive plate total surface area per unit plate group volume set in the appropriate range allows further erihancement of charge acceptance of the lead acid battery and its life performance in use under PSOC.

It is preferable to use the negative plate with both the charge acceptance and the life performance as high as possible. The present invention does not specify amounts of the carbonaceous conductive material to be added to the negative active material for improving the charge acceptance of the negative plate, the organic compound to be added to the negative active material for suppressing coarsening of the negative active material accompanied by charging and discharging, and the cationic coagulant and cationic surfactant to be added to the electrolyte. However, it is obvious that the respective amounts of those additives are set in order to improve the performance of the negative plate as high as possible for carrying out the present invention. It is also obvious that the amount of phosphoric acid to be added to the electrolyte is set for the purpose of improving performance of the positive plate as high as possible.

Advantageous Effect of Invention

According to the present invention, the positive plate with improved charge acceptance by setting the positive active material total surface area per unit plate group volume in the range between 3.5 $m^2/cm^3$ and 15.6 $m^2/cm^3$ is combined with the negative plate with improved charge acceptance and the life performance by adding the carbonaceous conductive material and the organic compound for suppressing coarsening of the negative active material thereto. Additionally, the compound(s) chosen from among cationic coagulant, cationic surfactant and phosphoric acid are added to the electrolyte so as to further enhance charge acceptance of the lead acid battery as a whole compared with the generally employed lead acid battery which has enhanced the charge acceptance by improving only the negative plate. Accordingly, this makes it possible to ensure the high-rate discharge to the load under PSOC, and to enhance the life performance in use under PSOC by suppressing coarsening of the lead sulfate accompanied by repetitive charging and discharging in the insufficient state of charge.

Brief Description of Drawings

FIG. 1 Fig. 1 is a chart representing a relationship between charging current and potentials of the negative and positive plates when charging the lead acid battery for automobile at the opening circuit voltage set to 12V while keeping the charging voltage at 14V (constant).

Description of Embodiments

The lead acid battery according to the present invention is of flooded-type, configured to perform intermittent charge and high-rate discharge to the load under PSOC. It is preferable to be used for the microhybrid vehicle such as ISS vehicle. The lead acid battery according to the present invention includes a plate group formed by stacking the negative plates each having the negative current collector filled with the negative active material and the positive plates each having the positive current collector filled with the positive active material via the separators, which is stored in the battery container together with the electrolyte. The basic structure as described above is similar to that of the generally employed lead acid battery.

The effort for improving the charge acceptance of the negative plate has been exclusively made to enhance the charge acceptance of the lead acid battery. The present invention further improves the charge acceptance of the positive plate as well as the negative plate, so that the negative and the positive plate which have been improved with respect to the charge acceptance are combined. Additionally, compound(s) chosen from among cationic coagulant, cationic surfactant and phosphoric acid are added to the electrolyte, aiming at enhancement of the charge acceptance of the lead acid battery. The life performance is also intended to be enhanced by suppressing coarsening of the lead sulfate accompanied by repetitive charging and discharging in the insufficient state of charge. Before explanation of the embodiment of the invention, the basic technical concept of the present invention will be described.

Findings of the inventor as a result of the analysis on relationships between potential change and charging current of the positive plate in charging, and between potential change and charging current of the negative plate in charging will be described as below. When using the negative plate with improved charge acceptance by decreasing the reaction overvoltage, improvement in the charge acceptance of the positive plate further enhances the charge acceptance of the lead acid battery as a whole in comparison with the generally employed lead acid battery which has improved charge acceptance only of the negative plate. Success in improvement of charge acceptance allows high-rate

discharge to the load under PSOC without interference and also improvement in the life performance by suppressing coarsening of the lead sulfate accompanied with repetitive charging and discharging in the insufficient state of charge.

FIG. 1 represents the relationship between the charging current and potentials of the negative and positive plates when charging the lead acid battery for an automobile at 12 V open circuit voltage while setting the charging voltage to 14V (constant). Referring to FIG. 1, the vertical axis represents the charging current and the horizontal axis represents potentials (vs.SHE) of the positive and negative plates measured in reference to the standard hydrogen electrode. The codes N1 and N2 of the drawing represent curves of the charging current vs potential of the negative plate. P1 and P2 represent curves of the charging current vs potential of the positive plate. Fundamentally, the curve of charging current vs potential of the negative plate should be shown in the third quadrant of the orthogonal coordinate system. However, FIG. 1 shows the curve of charging current vs potential of the negative plate, which has polarity of the potential and current inverted in the first quadrant together with the curve of charging current vs potential of the positive plate for convenience of explanation.

Referring to FIG. 1, the curve N1 of charging current vs potential is obtained at higher overvoltage of charge reaction of the negative plate compared with the curve N2. In the case of high overvoltage of charge reaction, the curve of charging current vs potential of the negative plate takes the shape largely expanded outward like the curve N1. In the case of low overvoltage, the curve takes a standing shape like N2 compared with the curve N1.

The P1 represents the curve of charging current vs potential at higher overvoltage of charge reaction of the positive plate compared with the curve P2. In the case of high overvoltage, the curve P1 of charging current vs potential takes a shape largely expanded outward compared with the curve P2 of charging current and voltage at the low reaction overvoltage. If the reaction overvoltage is low, the curve takes the standing position compared with the curve P1.

The charge reaction overvoltage corresponds to potential change which occurs at each plate upon application of the charging voltage in the open circuit. The overvoltage $\eta$ is expressed as an absolute value of the difference between the voltage of each plate and the equilibrium potential (open circuit voltage) derived from application of the charging voltage, as shown by the following expression of $\eta$= | potential of plate upon application of charging voltage - equilibrium potential|.

The curve of charging current vs potential of the negative plate which is not subjected to the specific process for improving the charge acceptance of the negative active material takes the shape largely expanded outward as the curve N1 shown in FIG. 1. Meanwhile, the curve of charging current vs potential of the negative plate with improved charge acceptance by addition of the carbonaceous conductive material and organic compound for suppressing coarsening of the negative active substance accompanied by charging and discharging to the negative active material takes a standing position like the curve N2.

The curve of charging current vs potential of the positive plate which is not subjected to the specific process for improving charge acceptance of the positive active material takes the shape like the curve P1 shown in FIG. 1. The P1 represents the curve of charging current vs potential of the positive plate used for the generally employed lead acid battery, taking a standing position compared with the curve N1. This indicates that the lead acid battery originally has the negative plate with low charge acceptance, and the positive plate with high charge acceptance. If the charge acceptance of the positive plate is improved by lowering the charge reaction overvoltage of the positive active material, the resultant curve of charging current vs potential of the positive plate takes further standing position like the curve P2 shown in FIG. 1 compared with the curve P1.

Assuming that the negative and positive plates corresponding to the characteristic curves N1 and P1 of charging current vs potential are used to assemble the lead acid battery, the charging current that flows upon application of charging voltage of 14V from the state at the open circuit voltage (12V) becomes I11. The open circuit voltage corresponds to the potential difference between the positive plate and the negative plate. The voltage of 14V to be applied corresponds to the potential difference between the positive plate and the negative plate.

Assuming that the negative plate with improved charge acceptance by decreasing the charge reaction overvoltage to form the characteristic curve N2 of.charging current vs potential is combined with the positive plate corresponding to the curve P1 of charging current vs potential to assemble the lead acid battery, the charging current which flows upon application of the charging voltage of 14V becomes I21 (>I11). This indicates that the charging current may be largely increased even if the curve P1 of charging current vs potential of the positive plate is kept unchanged (without specifically improving performance of the positive plate). In other words, improvement of charge acceptance of the negative active material to form the characteristic curve N2 of charging current vs potential makes it possible to greatly enhance the charge acceptance of the lead acid battery as a whole without specifically improving charge acceptance of the positive plate.

Assuming that the positive plate having the reaction overvoltage reduced to form the curve P2 of charging current vs potential is combined with the negative plate corresponding to the curve N1 of charging current vs potential to assemble the lead acid battery, the charging current that flows upon application of the charging voltage of 14V becomes I12 (>I11). This makes it possible to further enhance charge acceptance compared with the case using the positive plate corresponding to the curve P1 of charging current vs potential and the negative plate corresponding to the curve N1 of

charging current vs potential. However, the resultant enhancement of charge acceptance falls behind the case of combining the positive plate corresponding to the curve P1 of charging current vs potential with the negative plate corresponding to the curve N2 of charging current vs potential.

When combining the negative plate at the overvoltage reduced to establish the curve N2 of charging current vs potential (improving charge acceptance) with the positive plate at the overvoltage reduced to establish the curve P2 of charging current vs potential (improving charge acceptance) to assemble the lead acid battery, the charging current that flows upon application of the charging voltage of 14V may be increased up to 122 (> I11). This makes it possible to markedly enhance the charge acceptance of the lead acid battery as a whole compared with the case where charge acceptance of the negative plate is only improved.

The inventor of the present invention focuses on the findings as described above. That is, unlike the generally employed lead acid battery having only the negative plate subjected to improvement of charge acceptance, success in improvement of charge acceptance of the positive plate allows marked enhancement of charge acceptance of the lead acid battery as a whole when it is combined with the negative plate with improved charge acceptance.

After studying various types of measures to be taken for improving charge acceptance of the positive plate and conducting experiments, the following findings were obtained. That is, increase in the positive active material total surface area per unit plate group volume may improve charge acceptance of the positive plate to establish the curve of charging current vs potential like the curve P2 shown in FIG. 1, which takes the standing position. The positive active material total surface area per unit plate group volume is set to be in the range equal to or larger than 3.5 $m^2/cm^3$ to prepare the positive plate with improved charge acceptance. Meanwhile, the carbonaceous conductive material and organic compound for suppressing coarsening of the negative active material accompanied by charging and discharging are added to the negative active material to prepare the negative plate with improved charge acceptance and life performance. The thus prepared positive and negative plates are combined to assemble the lead acid battery. Furthermore, compound(s) chosen from among cationic coagulant, cationic surfactant and phosphoric acid are added to the electrolyte. Unlike the generally employed lead acid battery with enhanced charge acceptance as a whole only by improving charge acceptance of the negative plate, the lead acid battery according to the present invention is capable of further enhancing charge acceptance as a whole and life performance in use under PSOC.

According to the present invention, the specific surface area of the positive active material is measured through a gas adsorption method. The gas adsorption method as a general approach for the specific surface area measurement allows inert gas with known single molecular size to be adsorbed on the surface of the measurement sample so as to obtain the surface area using the adsorption amount and the area occupied with the inert gas. The method may employ nitrogen gas as the inert gas. The measurement is conducted based on the following BET expression.

The expression (1) is established when P/Po is in the range between 0.05 and 0.35. The expression (1) is modified (numerator and denominator in the left side is divided by P) to obtain the expression (2).

The specific surface meter is used for measuring the relationship between the adsorption amount (V) and relative pressure (P/Po) through adsorption of the gas molecules on the sample with known adsorption occupation area. The left side of the expression (2) and P/Po are plotted based on the measured values of V and P/Po. The inclination is set to s, and the expression (3) is derived from the expression (2).

Assuming that the intercept is set to i, the intercept i and the inclination s may be expressed by the following expressions (4) and (5), respectively.

The expressions (4) and (5) are modified into those (6) and (7), and then the expression (8) is obtained for calculating a single molecular layer adsorption amount Vm.

Values of the adsorption amount V at a certain relative pressure P/Po are measured at several points to obtain the inclination and intercept of the plot. Then the single molecular layer adsorption amount Vm is obtained. The total surface area of the sample Stotal is derived from the expression (9). The specific surface area S is derived from expression (10) using the total surface area Stotal.

[Expression 1]

$$\frac{P}{V(P_0 - P)} = \left(\frac{C-1}{V_m C}\right)\left(\frac{P}{P_0}\right) + \frac{1}{V_m C} \quad \text{------ Expression(1)}$$

*P: adsorption equilibrium pressure at constant temperature in the adsorption equilibrium state*

*Po: saturated vapor pressure* at *the adsorption temperature*

*V: adsorption amount at adsorption equilibrium pressure P*

*Vm: single molecular layer adsorption amount (adsorption amount obtained when the gaseous molecule forms the*

*single molecular layer on the solid surface)*
*C: BET constant (parameter concerning interaction between the solid surface and adsorbing substance)*

[expression 2]

$$\frac{1}{V\left(\frac{P_0}{P}-1\right)}=\left(\frac{C-1}{V_m C}\right)\left(\frac{P}{P_0}\right)+\frac{1}{V_m C}$$ ------ expression (2)

[expression 3]

$$s=\frac{C-1}{V_m C}=\frac{C}{V_m C}-\frac{1}{V_m C}=\frac{1}{V_m}-\frac{1}{V_m C}$$ ------ expression (3)

[expression 4]

$$i=\frac{1}{V_m C}$$ ------ expression (4)

[expression 5]

$$s=\frac{1}{V_m}-i$$ ------ expression (5)

[expression 6]

$$s\times V_m=1-i\times V_m$$ ------ expression (6)

[expression 7]

$$(s+i)V_m=1$$ ------ expression (7)

[expression 8]

$$V_m = \frac{1}{s+i} \quad \text{------ expression (8)}$$

[expression 9]

$$S_{total} = (V_m \times N \times A_{CS})M \quad \text{------ expression (9)}$$

*Stotal: total surface area ($m^2$)*
*Vm: single molecular layer adsorption amount (-)*
*N: Avogadro number (-)*
*ACS: cross sectional area of adsorption ($m^2$)*
*M: molecular weight (-)*

[expression 10]

$$S = \frac{S_{total}}{w} \quad \text{------ expression (10)}$$

*S: specific surface area ($m^2/g$)*
*W: sample size (g)*

Large value of the positive active material total surface area per unit plate group volume, that is, the product of the specific surface area of the active material and the active material mass indicates the capability of retaining the discharge reaction for a long period of time by maintaining the state where smooth spread movement of hydrogen ions ($H^+$) and sulfate ions ($SO_4^{2-}$) as reaction species of discharge reaction is performed for a long period of time. A large number of spread paths for the reaction species allow retaining of such spread of the reaction species for a long period of time.

Meanwhile, the charge reaction requires the spread path for the hydrogen ion and sulfate ion generated as the charge reaction proceeds. If the positive active total surface area per unit plate group volume is kept large, a lot of spread paths for the hydrogen ions and sulfate ions generated upon the charge reaction are provided so as to smoothly spread the products without being accumulated on the reaction surface of the plate. This makes it possible to facilitate proceeding of smooth charge reaction over the entire plate, which is expected to improve charge acceptance of the positive plate.

The present invention employs the carbon base conductive material as the carbonaceous conductive material to be added to the negative active material for improving the charge acceptance of the negative active material. Such material may be at least the one selected from the known carbonaceous conductive material group including graphite, carbon black, activated carbon, carbon fiber, and carbon nanotube.

Preferably, the carbonaceous conductive material is selected from the material group including graphite, carbon black, activated carbon, carbon fiber, and carbon nanotube. It is preferable to set the addition amount of the carbonaceous conductive material to be in the range between 0.1 and 3 pts.mass based on 100 pts.mass of the negative active material.

The lead acid battery installed in the microhybrid vehicle such as ISS vehicle and power generation control vehicle is operated in partial state of charge called PSOC. The lead acid battery operated in the aforementioned state may have the phenomenon called sulfation in the early stage where the lead sulfate as the insulator produced in the negative active material upon discharging is coarsened as the cycle of charging and discharging is repeatedly conducted. The sulfation considerably deteriorates charge acceptance and discharge performance of the negative active material.

The carbonaceous conductive material added to the negative active material serves to suppress coarsening of the lead sulfate so as to be maintained in the miniaturized state, and further suppress reduction in concentration of the lead ion that elutes from the lead sulfate for retaining the high charge acceptance.

The charge reaction of the negative active material depends on concentration of the lead ion dissolved from

the lead sulfate as the discharge product. As the lead ion content becomes higher, the charge acceptance is further increased. The carbonaceous conductive material to be added to the negative active substance functions in finely spreading the lead sulfate produced in the negative active material upon discharge. If the cycle of charging and discharging is repeatedly conducted in the insufficient state of charge, the lead sulfate as the discharge product is coarsened and the concentration of the lead ion dissolved from the lead sulfate decreases, thus deteriorating the charge acceptance. However, addition of the carbonaceous conductive material to the negative active material allows suppression of coarsening of the lead sulfate so as to be retained in the miniaturized state. As a result, the concentration of the lead ion dissolved from the lead sulfate may be kept high, and accordingly, high charge acceptance of the negative plate may be retained over a prolonged period of time.

According to the present invention, besides the aforementioned carbonaceous conductive material, at least the organic compound for suppressing coarsening of the negative active material accompanied by charging and discharging is added to the negative active material for the purpose of improving the negative plate performance.

It is preferable to use bisphenols aminobenzenesulfonic acid formaldehyde condensate, for example, bisphenol sodium aminobenzenesulfonic acid formaldehyde condensate as shown in the chemical structure formula 1. This will not interfere with the use of the other chemicals having the similar action, such as sodium lignin sulfonate having partial chemical structure as expressed by the chemical structure formula 2. It is also possible to use the formaldehyde condensate of bisphenols and sulfite as expressed by chemical structure formulae 3, 5 and 6, or the formaldehyde condensate of bisphenols and amino acid salt as expressed by the chemical structure formula 4.

[chemical formula 1]

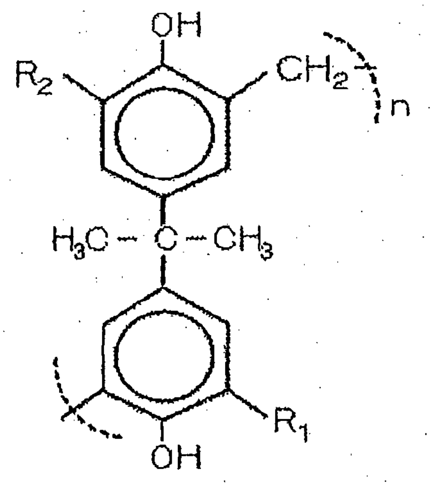

---- (chemical structure formula 1)

where each of $R_1$ and $R_2$ is hydrogen, or

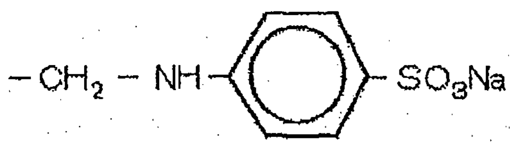

(except the case where $R_1$ and $R_2$ are hydrogens)

[chemical formula 2]

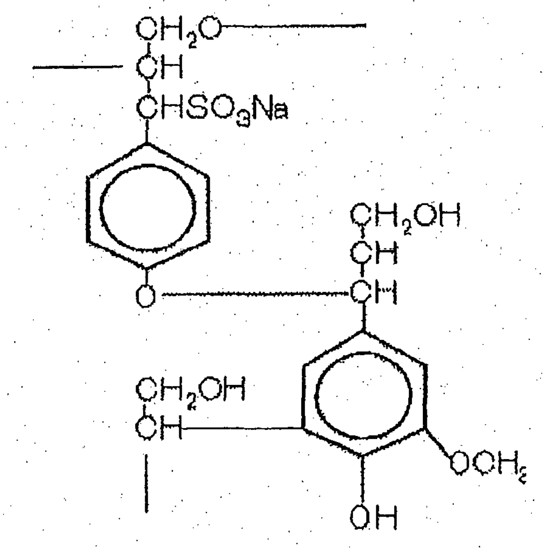

---- (chemical structure formula 2)

[chemical formula 3]

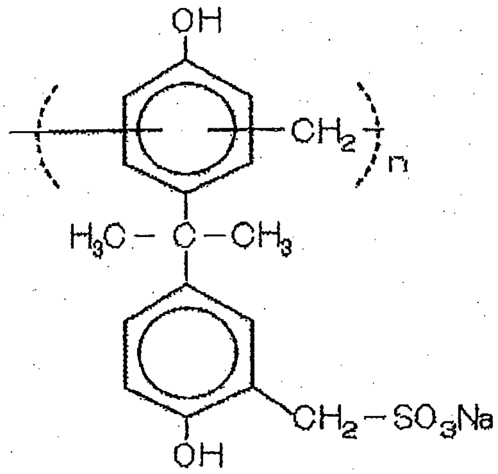

---- (chemical structure formula 3)

[chemical formula 4]

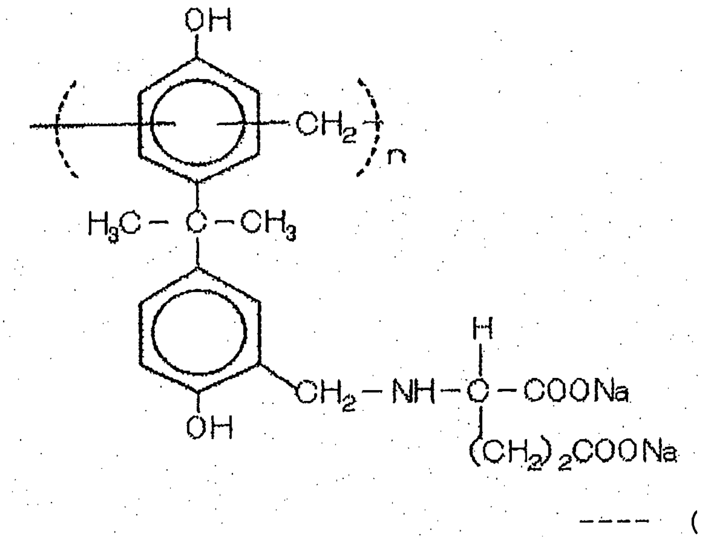

---- (chemical structure formula 4)

[chemical formula 5]

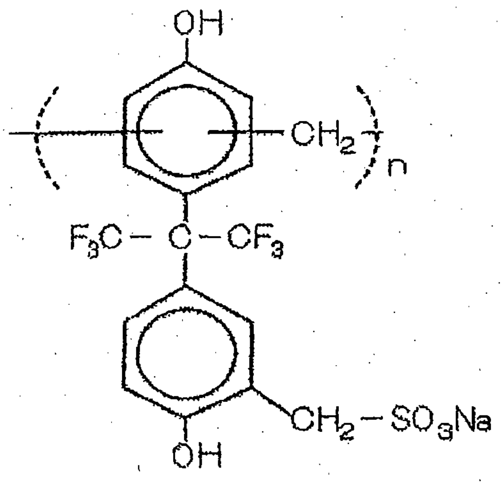

---- (chemical structure formula 5)

[chemical formula 6]

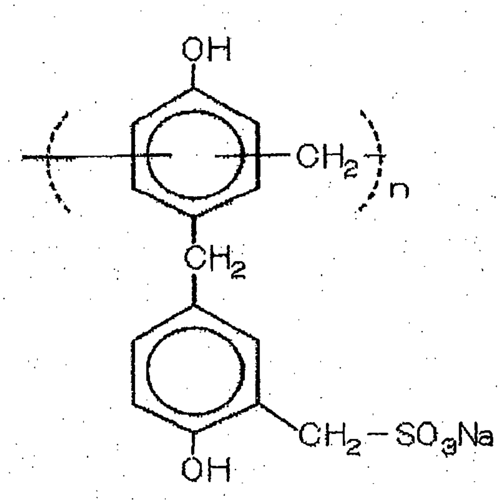

---- (chemical structure formula 6)

As described above, the carbonaceous conductive material and the organic compound for suppressing coarsening of the negative active material are added to the negative active material to improve the negative plate performance. It is possible to enhance the charge acceptance only by combining the negative plate with the positive plate as described above. Additionally, the charge acceptance of the battery as a whole may further be enhanced by adding compound(s) chosen from among cationic coagulant, cationic surfactant and phosphoric acid to the electrolyte.

As described above, the added cationic coagulant or added cationic surfactant is electrically adsorbed on the organic compound (negatively charged) for suppressing coarsening of the negative active material accompanied by charging and discharging and lessens the adsorption amount of the organic compound for suppressing coarsening of the negative active material accompanied by charging and discharging on the lead ion. This makes it possible to reduce the resultant side effect of interference with the charge reaction of the negative plate. The added phosphoric acid has the function for miniaturizing the lead sulfate of the positive plate, and accordingly allows the positive plate to improve the charge acceptance.

From the aforementioned point of view, the preferred embodiment of the present invention is configured to add the compound derived from combining the phosphoric acid with the cationic coagulant or the cationic surfactant.

As the cationic coagulant, it is possible to use the organic material such as arylamine amidosulfate polymer, arylamine polymer, arylamine dimethyl arylamine copolymer, partial urea polyarylamine, and polyvinylamidine so as to obtain similar effects. Meanwhile, it is possible to use the inorganic material such as aluminum sulfate and lime so as to obtain similar effects.

As the cationic surfactant, it is possible to use tetrapropylammonium bromide, tetrapropylammonium salt, alkyltrimethylammonium salt, dialkyldimethylammonium salt, alkylbenzyldimethylammonium salt so as to obtain similar effects.

Embodiment

An unformed positive plate was fabricated. Water was added to the mixture of lead oxide, red lead and cut fiber (polyethylene terephthalate short fiber, which will apply to the following description) for kneading. It was further kneaded while adding a small quantity of dilute sulfuric acid to produce an active material paste for the positive plate. An expanded current collector derived from subjecting a lead alloy rolled sheet to an expand process was filled with the active material paste, which was aged for 24 hours at the ambient temperature of 40°C with humidity of 95%. Thereafter, it was dried to provide the unformed positive plate.

Then an unformed negative plate was fabricated. Water was added to the mixture of lead oxide, cut fiber, barium sulfate, carbon black as the carbonaceous conductive material, and bisphenol A sodium aminobenzenesulfonic acid formaldehyde condensate as the organic compound for suppressing coarsening of the negative active material for kneading. It was further kneaded while adding a small quantity of dilute sulfuric acid to produce an active material paste for the negative plate. The expanded current collector derived from subjecting the lead alloy rolled sheet to the expand process was filled with the active material paste, which was aged for 24 hours at the ambient temperature of 40°C with humidity of 95%. Thereafter, it was dried to provide the unformed negative plate.

The negative plate, the positive plate, and the commercial polyethylene separator were combined to assemble a lead acid battery with size B19 as specified in JIS D5301. The battery was assembled by stacking the positive and negative plates alternately via the separators to form a plate group specified to set the positive plate total surface area per unit plate group volume to be in the range between 1.9 $cm^2/cm^3$ (3 positive plates and 3 negative plates) and 4.5 $cm^2/cm^3$ (7 positive plates and 7 negative plates). The respective lug parts of the plates with the same polarity were

welded through the cast-on strap (COS) process to fabricate the plate group. The volume of the plate group of the lead acid battery was 350 [$cm^3$]. In this embodiment, the same-sized positive and negative plates were used for forming the plate group. Then the plate group volume was obtained by multiplying a single surface area of the negative current collector (product of the width of 10.1[cm] and the height of 11.1[cm]) except lug and leg parts by 3.12[cm] as the thickness dimension of the plate group stored in the cell chamber (dimension measured in the plate laminating direction).

Formation was conducted in a battery container. Seven types of electrolytes were prepared by adding the additive selected from the following A, B, C and D to the dilute sulfuric acid with the specific gravity of 1.24 as indicated by Table 1.

A: arylamine amidosulfate polymer (organic cationic coagulant)
B: aluminum sulfate (inorganic cationic coagulant)
C: tetrapropylammonium bromide (cationic surfactant)
D: phosphoric acid

The electrolyte type E contains no additive. For every additive, the value around the addition amount according to the embodiment becomes optimum. If the addition amount is too large, capacity reduction and deterioration in charge acceptance may occur. The amount of the additive up to approximately five times larger than the one in the embodiment is the practically allowable upper limit. Meanwhile, insufficient amount of the additive may fail to provide sufficient effects. Therefore, the amount of the additive equivalent to approximately 1/5 of the one in the embodiment is the practically allowable lower limit.

[Table 1]

| ELECTROLYTE TYPE | ADDITION AMOUNT (g/l) | | | |
|---|---|---|---|---|
| | A | B | C | D |
| A | 10 | - | - | - |
| B | - | 10 | - | - |
| C | - | - | 1 | - |
| D | - | - | - | 1 |
| AD | 10 | - | - | 1 |
| BD | - | 10 | - | 1 |
| CD | - | - | 1 | 1 |
| E | - | - | - | - |

The respective electrolytes as listed in Table 1 were poured into the battery container of the assembled lead acid battery, the battery was formed with 200% electrical quantity of the theoretical capacity based on the active material mass in the battery container and fabrication of the lead acid battery was completed.

For the positive active material, the characteristic and amount of the active material vary in accordance with the temperature, current density and specific gravity of electrolyte upon formation, and amount of the lead sulfate contained in the active material paste. It is possible to decrease the specific surface area of the positive active material by increasing the temperature upon formation, and to increase the specific surface area by increasing the specific gravity of the electrolyte upon formation. In this embodiment, the active material mass was adjusted in accordance with the amount of lead sulfate contained in the active material paste. Simultaneously, the temperature upon formation in the battery container was adjusted to prepare various types of the lead acid storage batteries with different values of positive active material total surface area per unit plate group volume. Besides the amount of the lead sulfate contained in the active material paste and the formation condition, some condition, which is appropriately selected from among the lead powder starting material, lead powder kneading condition and plate aging condition for example, realizes adjustment of the positive active material total surface area per unit plate group volume. The expected effect of the present invention may be obtained through the different means for adjusting the positive active material total surface area per unit plate group volume so long as such factor is within the range specified by the present invention.

The positive active material per unit plate group volume was measured using the method for fabricating the battery for measurement of the active material characteristic, disassembling the battery to take out the positive plate, and obtain products of the measurement values of the specific surface area as indicated by the formulae (1) to (10) and

the active material mass. The resultant product was divided by the plate group volume.

The fabricated lead acid battery was subjected to measurements of charge acceptance and cycle characteristic. The charge acceptance measurement was conducted as described below. The lead acid battery at the initial assembly state was put in a thermostat chamber at 25°C so as to adjust SOC (state of charge) to 90% of the full state of charge. The charging current (5-second charging current value) was measured after 5 seconds from start of application of the charging voltage at 14V (the current before reaching 14V was limited to 100A). The higher 5-second charging current value indicates the high charge acceptance at the initial stage. The cycle of charge at the charging voltage of 14.8 V (limiting the current before reaching 14.8 V to 25A) for charge period of 10 minutes and constant current discharge at 25A for 4 minutes was repeated by 5000 cycles. Then the charge acceptance was measured in the similar condition to that of the charge acceptance measurement at the initial assembly stage. As the 5-second charging current value after 5000 cycles becomes high, good charge acceptance at the initial assembly stage may be retained onward.

The cycle characteristic (life test) was measured as described below. The ambient temperature was adjusted so as to set the battery temperature to 25°C. Thereafter, the life test, that was set to one cycle to be charged at the constant current-constant voltage of 100A-14V for 60 seconds after the constant current discharge respectively at 45A for 59 seconds and at 300A for 1 second, was conducted. This test is the cycle test simulating the use of the lead acid battery for the ISS vehicle. In the life test, the charging rate is low with respect to discharging rate. If charging is not completely conducted, the charging state becomes gradually insufficient. As a result, the 1-second discharging voltage value upon discharge at 300A for 1 second is gradually decreased. In other words, if the negative plate is polarized upon constant current-constant voltage charge and switched to the constant voltage charge at an early stage, the charging current is attenuated to be brought into insufficient state of charge. In this life test, the timing at which the 1-second discharging voltage value upon discharge at 300A is decreased to be below 7.2 V is determined as the battery life.

If the high charge acceptance cannot be maintained during the cycle of charging and discharging, the insufficient state of charge is retained to deteriorate the cycle characteristic. Evaluation of the change in the 5-second charging current value accompanied by the cycle of charging and discharging and the cycle characteristic makes it possible to determine adequacy of the charge acceptance during the cycle of charging and discharging.

The aforementioned test allows evaluation of the charge acceptance in the constant voltage charge and durability in use under PSOC.

Tables 2 to 5 show results of measurement of 5-second charging currents and the cycle characteristics, which were conducted with respect to various types of fabricated lead acid storage batteries. Referring to Table 2, prior art 1 was set the positive active material total surface area per unit plate group volume to 3.0 $m^2/cm^3$ and used the electrolyte type E. Referring to Tables 2 and 3, a reference example 1 was set the positive active material total surface area per unit plate group volume to 3.0 $m^2/cm^3$ and used the electrolyte type A, and a reference example 2 was set the positive active material total surface area per unit plate group volume to 16.0 $m^2/cm^3$ and used the electrolyte type A. Furthermore, a reference example 3 was set the positive active material total surface area per unit plate group volume to 3.0 and used the electrolyte type B. A reference example 4 was set the positive active material total surface area per unit plate group volume to 16.0 $m^2/cm^3$ and used the electrolyte type B. Likewise, Reference examples 5 and 6 used the electrolyte type C, and reference examples 7 and 8 used the electrolyte type D. Reference examples 9 and 10 used the electrolyte type AD, and reference examples 11 and 12 used the electrolyte type BD. Reference examples 13 and 14 used the electrolyte type CD.

The 5-second charging currents and the cycle characteristics listed in the respective tables were evaluated in reference to the prior art 1 of Table 2 as 100 (for 5-second charging current, the initial stage was set to 100).

[Table 2]

| No. | POSITIVE ACTIVE MATEIRL TOTAL SURFACE AREA PER UNIT PLATE GROUP VOLUME ($m^2/cm^3$) | POSITIVE PLATE TOTAL SURFACE AREA PER UNIT PLATE GROUP VOLUME ($cm^2/cm^3$) | ELECTROLYTE TYPE | 5-SECOND CHARGING CURRENT VALUE | | CYCLE CHARACTERISTIC | REMARKS |
|---|---|---|---|---|---|---|---|
| | | | | INITIAL STAGE | AFTER 5000 CYCLES | | |
| 0 | 3.0 | 3.2 (5 POSITIVE PLATES, 5 NEGATIVE PLATES) | E | 80 | 35 | 80 | PRIOR ART 1 |
| 1 | 3.0 | | A | 100 | 49 | 100 | REFERENCE EXAMPLE 1 |
| 2 | 3.5 | | | 103 | 51 | 106 | EMBODIMENT |
| 3 | 6.0 | | | 105 | 52 | 109 | |
| 4 | 8.0 | | | 106 | 53 | 111 | |
| 5 | 10.0 | | | 107 | 52 | 109 | |
| 6 | 12.5 | | | 109 | 51 | 106 | |
| 7 | 15.6 | | | 110 | 51 | 103 | |
| 8 | 16.0 | | | 111 | 44 | 86 | REFERENCE EXAMPLE 2 |
| 9 | 3.0 | | B | 119 | 78 | 115 | REFERENCE EXAMPLE 3 |
| 10 | 3.5 | | | 139 | 101 | 126 | EMBODIMENT |
| 11 | 6.0 | | | 156 | 113 | 130 | |
| 12 | 8.0 | | | 164 | 119 | 142 | |
| 13 | 10.0 | | | 175 | 115 | 133 | |
| 14 | 12.5 | | | 179 | 109 | 131 | |
| 15 | 15.6 | | | 182 | 102 | 122 | |
| 16 | 16.0 | | | 184 | 88 | 108 | REFERENCE EXAMPLE 4 |
| 17 | 3.0 | | C | 111 | 70 | 103 | REFERENCE EXAMPLE 5 |
| 18 | 3.5 | | | 131 | 93 | 108 | EMBODIMENT |

(continued)

| No. | POSITIVE ACTIVE MATEIRL TOTAL SURFACE AREA PER UNIT PLATE GROUP VOLUME ($m^2/cm^3$) | POSITIVE PLATE TOTAL SURFACE AREA PER UNIT PLATE GROUP VOLUME ($cm^2/cm^3$) | ELECTROLYTE TYPE | 5-SECOND CHARGING CURRENT VALUE | | CYCLE CHARACTERISTIC | REMARKS |
|---|---|---|---|---|---|---|---|
| | | | | INITIAL STAGE | AFTER 5000 CYCLES | | |
| 19 | 6.0 | | | 148 | 105 | 111 | |
| 20 | 8.0 | | | 156 | 111 | 113 | |
| 21 | 10.0 | | | 167 | 107 | 111 | |
| 22 | 12.5 | | | 171 | 101 | 108 | |
| 23 | 15.6 | | | 174 | 94 | 103 | |
| 24 | 16.0 | | | 175 | 79 | 89 | REFERENCE EXAMPLE 6 |

[Table 3]

| No . | POSITIVE ACTIVE MATERIAL TOTAL SURFACE AREA PER UNIT PLATE GROUP VOLUME ($m^2/cm^3$) | POSITIVE PLATE TOTAL SURFACE AREA PER UNIT PLATE GROUP VOLUME ($cm^2/cm^3$) | ELECTROLYTE TYPE | 5-SECOND CHARGING CURRENT VALUE | | CYCLE CHARACTERISTIC | REMARKS |
|---|---|---|---|---|---|---|---|
| | | | | INITIAL STAGE | AFTER 5000 CYCLES | | |
| 25 | 3.0 | 3.2 (5 POSITIVE PLATES, 5 NEGATIVE PLATES) | D | 109 | 68 | 104 | REFERENCE EXAMPLE 7 |
| 26 | 3.5 | | | 129 | 91 | 108 | EMBODIMENT |
| 27 | 6.0 | | | 146 | 103 | 112 | |
| 28 | 8.0 | | | 154 | 109 | 114 | |
| 29 | 10.0 | | | 165 | 105 | 112 | |
| 30 | 12.5 | | | 169 | 99 | 109 | |
| 31 | 15.6. | | | 172 | 92 | 104 | |
| 32 | 16.0 | | | 174 | 78 | 89 | REFERENCE |
| | | | | | | | EXAMPLE 8 |
| 33 | 3.0 | | AD | 115 | 93 | 107 | REFERENCE EXAMPLE 9 |
| 34 | 3.5 | | | 155 | 107 | 113 | EMBODIMENT |
| 35 | 6.0 | | | 189 | 121 | 117 | |
| 36 | 8.0 | | | 205 | 135 | 119 | |
| 37 | 10.0 | | | 227 | 149 | 119 | |
| 38 | 12.5 | | | 235 | 133 | 114 | |
| 39 | 15.6 | | | 241 | 127 | 109 | |
| 40 | 16.0 | | | 245 | 101 | 94 | REFERENCE EXAMPLE 10 |
| 41 | 3.0 | | BD | 128 | 108 | 112 | REFERENCE EXAMPLE 11 |
| 42 | 3.5 | | | 168 | 122 | 118 | |

(continued)

| No . | POSITIVE ACTIVE MATERIAL TOTAL SURFACE AREA PER UNIT PLATE GROUP VOLUME ($m^2/cm^3$) | POSITIVE PLATE TOTAL SURFACE AREA PER UNIT PLATE GROUP VOLUME ($cm^2/cm^3$) | ELECTROLYTE TYPE | 5-SECOND CHARGING CURRENT VALUE | | CYCLE CHARACTERISTIC | REMARKS |
|---|---|---|---|---|---|---|---|
| | | | | INITIAL STAGE | AFTER 5000 CYCLES | | |
| 43 | 6.0 | | | 202 | 136 | 122 | EMBODIMENT |
| 44 | 8.0 | | | 218 | 150 | 124 | |
| 45 | 10.0 | | | 240 | 164 | 122 | |
| 46 | 12.5 | | | 248 | 158 | 119 | |
| 47 | 15.6 | | | 254 | 142 | 114 | |
| 48 | 16.0 | | | 258 | 125 | 99 | REFERENCE EXAMPLE 12 |
| 49 | 3.0 | | CD | 120 | 98 | 109 | REFERENCE EXAMPLE 13 |
| 50 | 3.5 | | | 160 | 112 | 115 | EMBODIMENT |
| 51 | 6.0 | | | 194 | 126 | 119 | |
| 52 | 8.0 | | | 210 | 140 | 121 | |
| 53 | 10.0 | | | 232 | 154 | 119 | |
| 54 | 12.5 | | | 240 | 148 | 116 | |
| 55 | 15.6 | | | 246 | 132 | 111 | |
| 56 | 16.0 | | | 250 | 115 | 96 | REFERENCE EXAMPLE 14 |

Tables 2 and 3 show measurement results of the 5-second charging currents and cycle characteristics about various kinds of lead acid storage batteries derived from combinations of 8 kinds of positive plates each having the positive active material total surface area per unit plate group volume changed between 3.0 and 16.0 $m^2/cm^3$ with 4 kinds of electrolyte types A, B, C and D, individually, or with pairs of electrolyte types AD, BD and CD, respectively while fixing the positive plate total surface area per unit plate group volume to 3.2 $m^2/cm^3$.

The results show that setting of the positive active material total surface area per unit plate group volume to be in the range between 3.5 and 15.6 $m^2/cm^3$ may improve both the 5-second charging current (charge acceptance) and the cycle characteristic (life performance under PSCO) compared with the prior art and the reference examples irrespective of use of any of the electrolyte additives A, B, C and D.

It has been also clarified that combining the electrolyte additive D with A, B, and C, respectively improves both the 5-second charging current (charge acceptance) and the cycle characteristic (life performance under PSOC) significantly compared with use of the electrolyte additive A, B, C and D, independently. The cationic coagulant and the cationic surfactant serve to improve the charge acceptance by preventing adsorption of the lead ion onto the organic compound for suppressing coarsening of the negative-active material. The phosphoric acid serves to miniaturize the lead sulfate produced in the positive plate to improve the charge acceptance. It has been thought that combining the compound(s) with different actions as described above may further enhance both the charge acceptance and the cycle characteristic.

The 5-second charging current continues to rise as the increase in the positive active material total surface area per unit plate group volume. Meanwhile, the cycle characteristic turns to be decreased after reaching the peak in the medial stage. Especially when the positive active material total surface area per unit plate group volume reaches 16.0 $m^2/cm^3$, the cycle characteristic tends to sharply decline compared with the case of 15.6 $m^2/cm^3$, which is caused by the phenomenon called muddying to collapse the active material structure owing to repetitive charging and discharging. In view of this, the positive active material total surface area per unit plate group volume is set to be in the range between 3.5 and 15.6 $m^2/cm^3$.

Tables 2 and 3 show the results derived from the use of the compounds expressed by the chemical structure formula 1 as the organic compound for suppressing coarsening of the negative active material. The use of the compounds expressed by the chemical structure formulae from 2 to 6 presents the similar tendency.

[Table 4]

| No. | POSITIVE ACTIVE MATERIAL TOTAL SURFACE AREA PER UNIT PLATE GROUP VOLUME ($m^2/cm^3$) | POSITIVE PLATE TOTAL SURFACE AREA PER UNIT PLATE GROUP VOLUME ($cm^2/cm^3$ ) | ELECTROLYTE TYPE | 5-SECOND CHARGING CURRENT | | CYCLE CHARACTERISTIC | REMARKS |
|---|---|---|---|---|---|---|---|
| | | | | INITIAL STAGE | AFTER 5000 CYCLES | | |
| 57 | 6.0 | 1.9 (3 POSITIVE PLATES,3 NEGATIVE PLATES) | A | 100 | 49 | 120 | EMBODIMENT |
| 58 | | 2.6 (4 POSITIVE PLATES,4 NEGATIVE PLATES) | | 102 | 50 | 111 | |
| 59 | | 3.2 (5 POSITIVE PLATES,5 NEGATIVE PLATES) | | 105 | 52 | 109 | |
| 60 | | 3.9 (6 POSITIVE PLATES,6 NEGATIVE PLATES) | | 107 | 53 | 105 | |
| 61 | | 4.5 (7 POSITIVE PLATES,7 NEGATIVE PLATES) | | 115 | 58 | 103 | |
| 62 | 12.5 | 1.9 (3 POSITIVE PLATES,3 NEGATIVE PLATES) | | 104 | 48 | 115 | |
| 63 | | 2.6 (4 POSITIVE PLATES,4 NEGATIVE PLATES) | | 106 | 49 | 108 | |
| 64 | | 3.2 (6 POSITIVE PLATES,5 NEGATIVE PLATES) | | 109 | 51 | 106 | |
| 65 | | 3.9 (6 POSITIVE PLATES, 6 NEGATIVE PLATES) | | 112 | 55 | 103 | |
| 66 | | 4.5 (7 POSITIVE PLATES, 7 NEGATIVE PLATES) | | 120 | 61 | 101 | |

Table 4 shows measurement results of the 5-second charging currents and cycle characteristics about various kinds of lead acid storage batteries derived from changing the positive plate total surface area per unit plate group volume between 1.9 and 4.5 $cm^2/cm^3$ when values of the positive active material total surface area per unit plate group volume are set to 6.0 and 12.5 $m^2/cm^3$, respectively.

Those results show that increase in the positive plate total surface area per unit plate group volume, that is, increase in the number of plates increased the 5-second charging current, but deteriorated the cycle characteristic. The restriction demanding storage of the plate group in the battery container with constant volume sets a limit to thinning of the plate. Generally, it is difficult to set the positive plate total surface area per unit plate group volume to 4.5 $cm^2/cm^3$. On the contrary, setting of the positive plate total surface area per unit plate group volume to 1.9 $cm^2/cm^3$ makes the plate thick. Generally, it is difficult to satisfy the rated capacity owing to the limitation demanding storage in the battery container with constant volume. It is the most preferable to set the positive plate total surface area per unit plate group volume to be in the range between 2.6 and 3.9 $cm^2/cm^3$. Any other case except the one using the electrolyte type A also presents the similar tendency.

[Table 5]

| No. | POSITIVE ACTIVE MATERIAL TOTAL SURFACE AREA PER UNIT PLATE GROUP VOLUME ($m^2/cm^3$) | POSITIVE PLATE TOTAL SURFACE AREA PER UNIT PLATE GROUP VOLUME ($cm^2/cm^3$) | ELECTROLYTE TYPE | 5-SECOND CHARGING CURRENT | | CYCLE CHARACTERISTIC | REMARKS |
|---|---|---|---|---|---|---|---|
| | | | | INITIAL STAGE | AFTER 5000 CYCLES | | |
| 67 | 5.5 | 2.6 (4 POSITIVE PLATES,5 NEGATIVE PLATES) | A | 102 | 49 | 104 | EMBODIMENT |
| 68 | 6.0 | 3.2(5 POSITIVE PLATES, 5 NEGATIVE PLATES) | | 105 | 52 | 109 | |
| 69 | 6.5 | 3.2 (5 POSITIVE PLATES,4 NEGATIVE PLATES) | | 107 | 54 | 112 | |

One of A and B has more number of sheets than the other number of sheets.

Table 5 shows measurement results of the 5-second charging currents and cycle characteristics about lead acid storage batteries derived from the plate group composition where the number of positive plates is more than the number of negative plates or the number of negative plates is more than the number of positive plates in reference to No.3 of the embodiment (Table 2) where each number of the positive and negative plates is the same. In this embodiment (Nos. 67, 69), the thickness corresponding to the decrease by one plate was adjusted by equal allocation to the thickness of the positive and negative plates. As a result, values of the positive active material total surface area and the positive plate total surface area per unit plate group volume were changed as shown in Table 5.

The results show that the case having more positive plates than the negative plates improved both the 5-second charging current and the cycle characteristic. Any other case except the use of the electrolyte type A also presents the similar tendency.

Conventionally, many efforts have been made to improve charge acceptance and life performance only of the negative plate for the purpose of enhancing the charge acceptance of the lead acid battery. The concept of improving the positive plate performance has not been considered for enhancement of the charge acceptance of the lead acid battery. Generally, the charge acceptance of the lead acid battery as a whole is determined in accordance with the charge acceptance of the negative plate. Accordingly, there is a limitation in enhancement of the charge acceptance of the lead acid battery. The present invention focuses on the performance of the positive active material so as to be improved for breaking through the aforementioned limitation, and has enabled to further enhance the charge acceptance of the battery as a whole greater than the generally employed lead acid battery by adding the compound(s) chosen from among cationic coagulant, cationic surfactant and phosphoric acid to the electrolyte.

Prior art aims at enhancing the charge acceptance only by improving characteristics of the negative plate. The present invention sets the value of the positive active material total surface area per unit plate group volume to a large value to improve the charge acceptance of the positive plate. Additionally, the compound(s) chosen from among cationic coagulant, cationic surfactant and phosphoric acid are added to the electrolyte to enable enhancement of the battery as a whole compared with prior art. This also allows high-rate discharge under PSOC.

The present invention is capable of enhancing the charge acceptance of the lead acid battery to prevent repetition of charging and discharging in the insufficient state of charge. It is possible to prevent coarsening of the lead sulfate as the discharge product caused by the repetition of charging and discharging in the insufficient state of charge. As a result, the life performance of the lead acid battery used under PSOC may further be improved, which shows the great advancement of the lead acid battery in use under PSOC, largely contributing to the improved performance of the lead acid battery installed in the microhybrid vehicle.

Industrial Applicability

As described above, the present invention is capable of providing the flooded-type lead acid battery with charge acceptance and life performance under PSOC which are enhanced greater than generally employed lead acid battery, contributing to popularization of the ISS vehicle and microhybrid vehicle such as the power generation control vehicle. Accordingly, the present invention aims at reducing carbon dioxide emission by improving the vehicular fuel efficiency to be helpful for solving the worldwide task to ease global warming as well as presenting significant industrial applicability.

## Claims

**1.** A lead acid battery of flooded-type including
a negative plate formed by filling a negative current collector with a negative active material, and
a positive plate formed by filling a positive current collector with a positive active material,
which are stacked via a separator to form a plate group, the plate group being stored in a battery container with an electrolyte,
wherein at least a carbonaceous conductive material and an organic compound are added to the negative active material;
the positive plate is configured to set a positive active material total surface area per unit plate group volume [$cm^3$] to be in a range between 3.5 and 15.6 [$m^2/cm^3$], and

compound(s) chosen from among a cationic coagulant, a cationic surfactant, and a phosphoric acid are added to the electrolyte,

wherein the organic compound for suppressing coarsening of the negative active material accompanied by charging and discharging is composed of at least one of:

bisphenols aminobenzenesulfonic acid formaldehyde condensate;
sodium lignin sulfonate having partial chemical structure as expressed by formula 2;
formaldehyde condensate of bisphenols and sulfite as expressed by chemical structure formulae 3, 5 and 6, or the formaldehyde condensate of bisphenols and amino acid salt as expressed by the chemical structure formula 4;

formula 2:

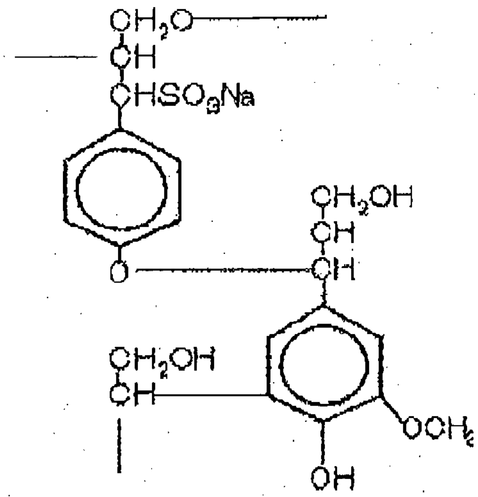

;

formula 3

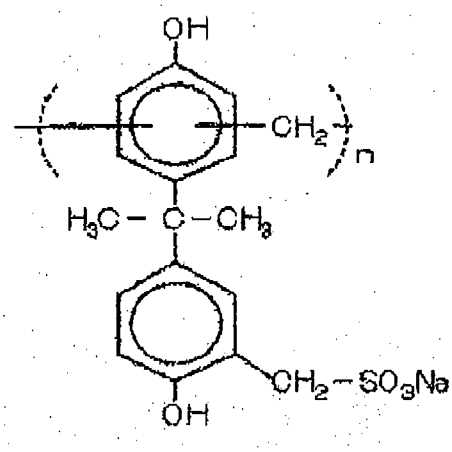

;

formula 4

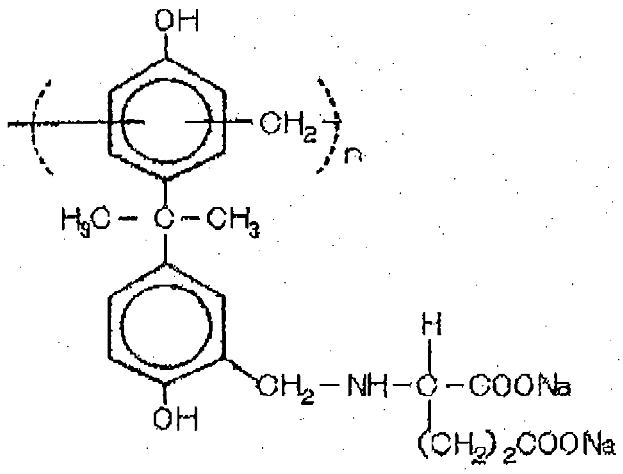

;

formula 5

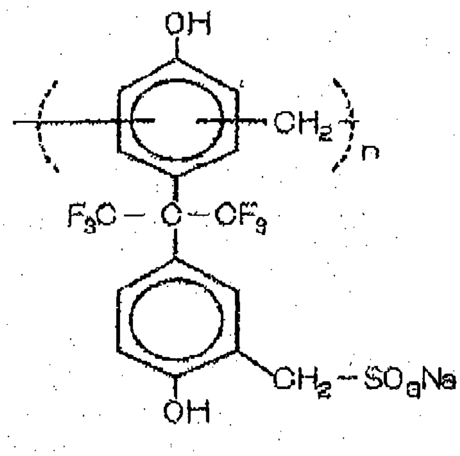

;

formula 6

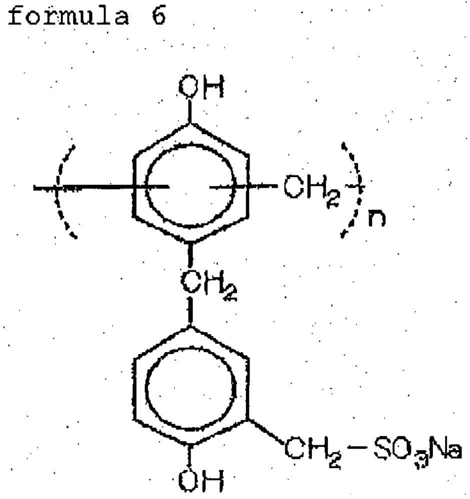

2. The lead acid battery according to claim 1, wherein the positive plate is configured to set a positive plate total surface area per unit plate group volume [$cm^3$] to be in a range between 2.6 and 3.9 $cm^2/cm^3$.

3. The lead acid battery according to claim 1 or 2, wherein the number of the positive plates that constitute the electrode group is set to be equal to or larger than the number of the negative plates.

4. The lead acid battery according to any one of claims 1 to 3, wherein the phosphoric acid and any one of the cationic coagulant and the cationic surfactant are added.

## Patentansprüche

1. Bleiakkumulator des Flüssigelektrolyttyps, die Folgendes umfasst:

eine negative Platte, die durch Befüllen eines negativen Stromkollektors mit einem negativen aktiven Material gebildet ist, und
eine positive Platte, die durch Befüllen eines positiven Stromkollektors mit einem positiven aktiven Material gebildet ist,
die über einen Separator gestapelt sind, um eine Plattengruppe zu bilden,
wobei die Plattengruppe in einem Batteriebehälter mit einem Elektrolyt aufbewahrt ist,
wobei wenigstens ein kohlenstoffhaltiges leitendes Material und eine organische Verbindung zu dem negativen aktiven Material hinzugefügt sind;
die positive Platte konfiguriert ist, damit der gesamte Oberflächeninhalt des positiven aktiven Materials pro Einheits-Plattengruppenvolumen [$cm^3$] in einem Bereich von 3,5 bis 15,6 [$m^2/cm^3$] liegt, und
eine oder mehrere Verbindungen, die aus einem kationischen Koagulans, einer kationischen oberflächenaktiven Substanz und einer Phosphorsäure gewählt sind, zu dem Elektrolyt hinzugefügt sind,
wobei die organische Verbindung zum Unterdrücken einer Vergröberung des negativen aktiven Materials, das von einem Laden und Entladen begleitet wird, aus wenigstens einem der Folgenden aufgebaut ist:

Bisphenol-Aminobenzensulfonsäure-Formaldehyd-Kondensat;
Natrium-Lignin-Sulfonat mit einer partiellen chemischen Struktur wie durch die Formel 2 angegeben;
Formaldehyd-Kondensat von Bisphenolen und Sulfit wie durch die chemischen Strukturformeln 3, 5 und 6 angegeben; oder
Formaldehyd-Kondensat von Bisphenolen und Aminosäuresalz wie durch die chemische Strukturformel 4 angegeben;

Formel 2:

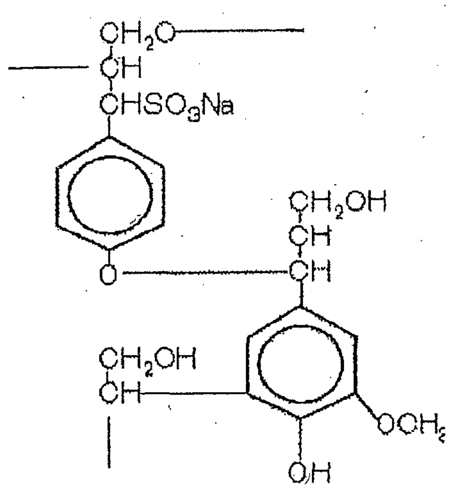

Formel 3:

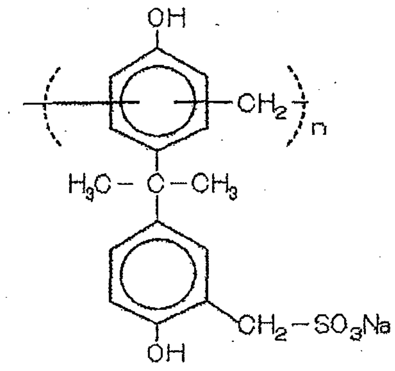

Formel 4:

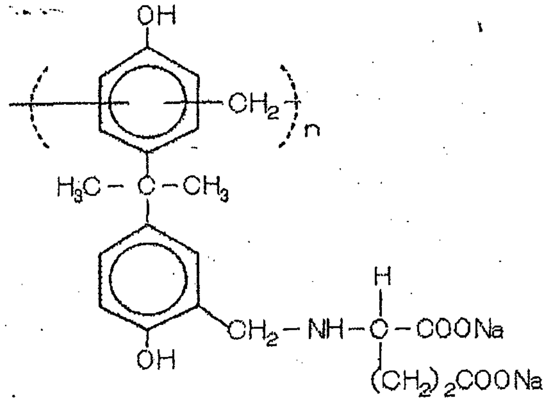

Formel 5:

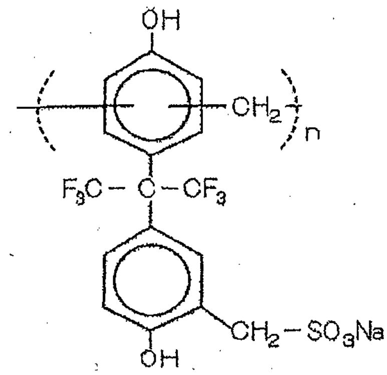

Formel 6:

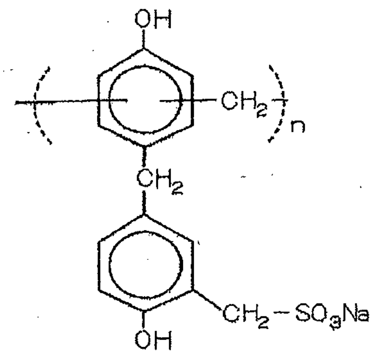

2. Bleiakkumulator nach Anspruch 1, wobei die positive Platte konfiguriert ist, damit ein gesamter Oberflächeninhalt der positiven Platte pro Einheits-Plattengruppenvolumen [$cm^3$] in einem Bereich von 2,6 bis 3,9 [$m^2/cm^3$] liegt.

3. Bleiakkumulator noch Anspruch 1 oder 2, wobei die Anzahl der positiven Platten, die die Elektrodengruppe bilden, gleich oder größer als die Anzahl der negativen Platten festgelegt ist.

4. Bleiakkumulator nach einem der Ansprüche 1 bis 3, wobei die Phosphorsäure und irgendeines des kationischen Koagulans oder der kationischen oberflächenaktiven Substanz hinzugefügt sind.

**Revendications**

1. Batterie d'accumulateurs au plomb de type à électrolyte liquide comprenant :

une plaque négative formée par remplissage d'un collecteur de courant négatif par une matière active négative, et une plaque positive formée par remplissage d'un collecteur de courant positif par une matière active positive, qui sont empilées au moyen d'un séparateur pour former un groupe de plaques,
le groupe de plaques étant stocké dans un contenant de batterie avec un électrolyte,
dans laquelle au moins une matière conductrice carbonée et un composé organique sont ajoutés à la matière active négative ;
la plaque positive est configurée pour régler une surface spécifique totale de matière active positive par unité de volume de groupe de plaques [$cm^3$] pour être dans une plage entre 3,5 et 15,6 [$m^2/cm^3$], et
un ou des composés choisis parmi un coagulant cationique, un tensio-actif cationique et un acide phosphorique sont ajoutés à l'électrolyte,
dans laquelle le composé organique pour supprimer le grossissement de la matière active négative causé par charge et la décharge est composé d'au moins l'un parmi :

un condensat bisphénols acide aminobenzènesulfonique formaldéhyde
un lignine sulfonate de sodium ayant une structure chimique partielle telle qu'exprimée par la formule 2 ;
un condensat de formaldéhyde avec des bisphénols et un sulfite tel qu'exprimé par les formules de structure chimique 3, 5 et 6, ou
le condensat de formaldéhyde avec des bisphénols et un sel d'acide aminé, tel qu'exprimé par la formule de structure chimique 4 ;

formule 2 :

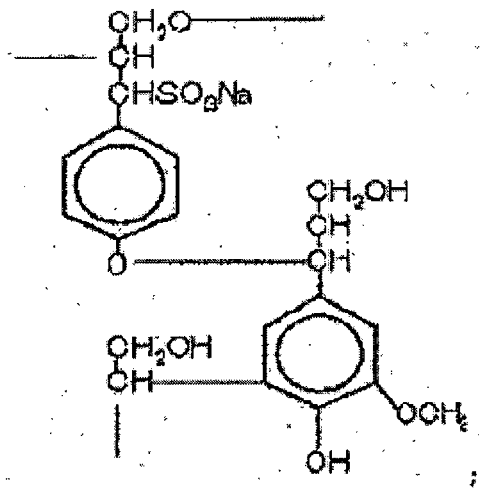

formule 3 :

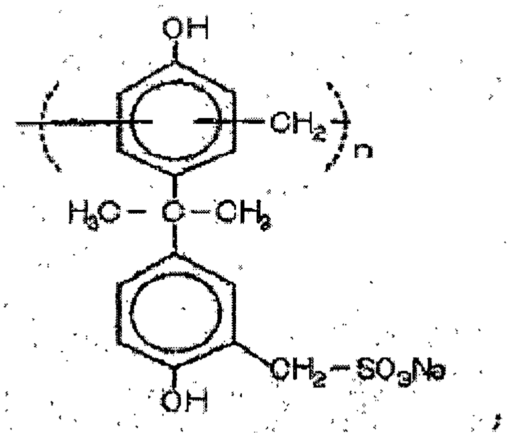

formule 4 :

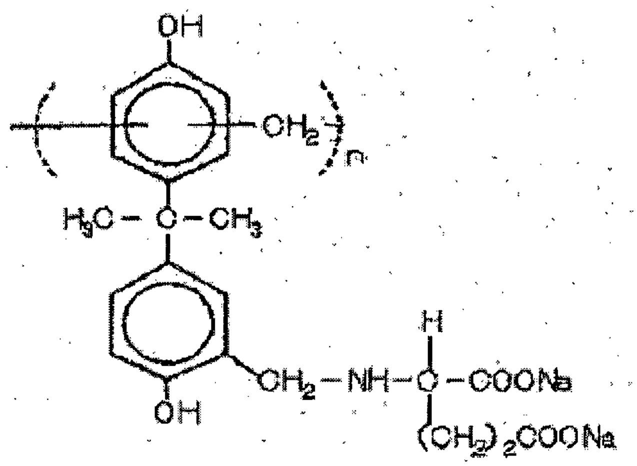

;

formule 5 :

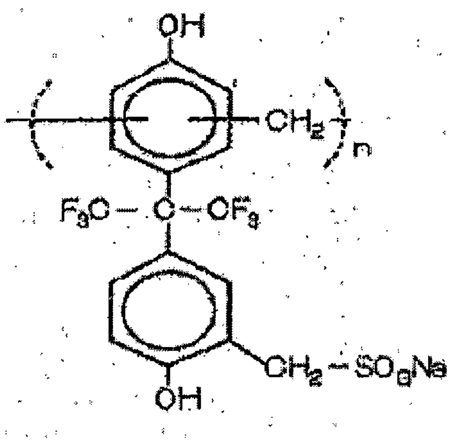

;

formule 6 :

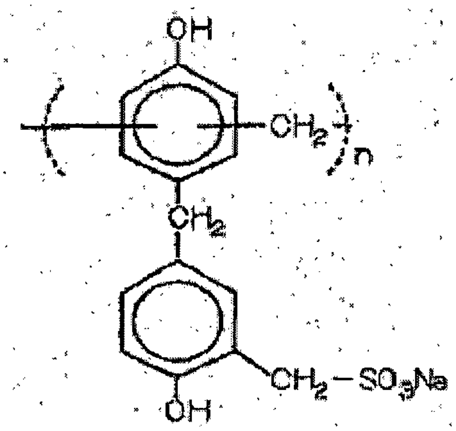

2. Batterie d'accumulateurs au plomb selon la revendication 1, dans laquelle la plaque positive est configurée pour régler une surface spécifique totale de plaque positive par unité de volume de groupe de plaques [$cm^3$] pour être dans une plage entre 2,6 et 3,9 $cm^2/cm^3$.

3. Batterie d'accumulateur au plomb selon l'une des revendications 1 ou 2, dans laquelle le nombre des plaques positives qui constituent le groupe d'électrodes est réglé pour être supérieur ou égal au nombre des plaques négatives.

4. Batterie d'accumulateurs au plomb selon l'une quelconque des revendications 1 à 3, dans laquelle l'acide phosphorique et n'importe lequel parmi le coagulant cationique et le tensio-actif cationique sont ajoutés.

FIG. 1

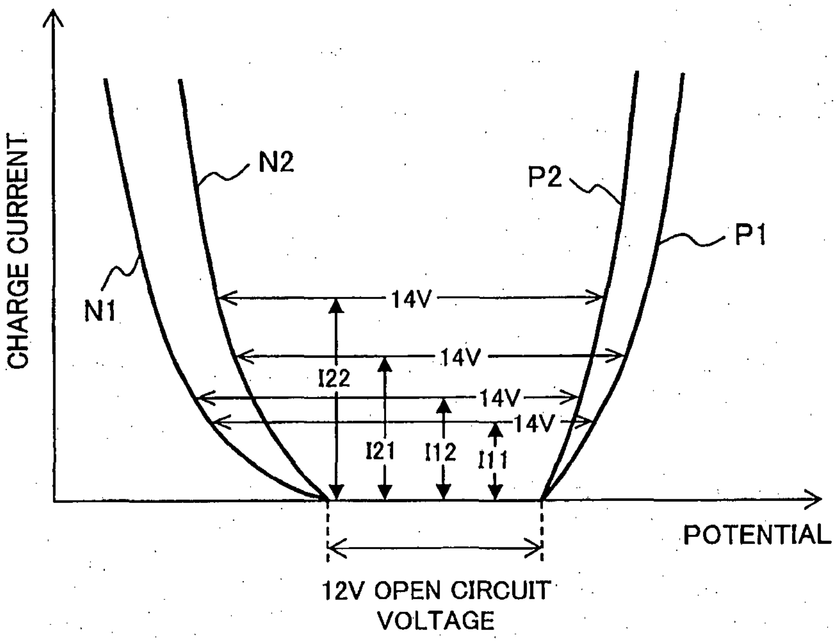
CHARGE CURRENT
N2
P2
P1
N1
14V
14V
14V
14V
I22
I21
I12
I11
POTENTIAL
12V OPEN CIRCUIT
VOLTAGE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003036882 A
- JP 7201331 A
- JP 2006196191 A
- JP 2003051306 A
- JP 10040907 A
- JP 62029073 A
- JP 2236967 A
- JP 2011165378 A
- US 2008107960 A1
- EP 2280443 A1
- JP H02106875 B